(19) Europäisches Patentamt
European Patent Office
Office européen des brevets

(11) EP 4 475 426 A1

(12) EUROPEAN PATENT APPLICATION

(43) Date of publication:
11.12.2024 Bulletin 2024/50

(51) International Patent Classification (IPC):
$H02P\ 21/18^{(2016.01)}$

(21) Application number: 23177573.5

(22) Date of filing: 06.06.2023

(52) Cooperative Patent Classification (CPC):
H02P 21/18; H02P 21/13; H02P 2101/15

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Siemens Gamesa Renewable Energy
A/S
7330 Brande (DK)

(72) Inventors:
• Freire, Nuno Miguel Amaral
  3150-109 Condeixa (PT)
• Wu, Ximeng
  Wei Hai City, Shan Dong Province 264200 (CN)
• Zhu, Ziqiang
  Sheffield S10 5TR (GB)

(74) Representative: SGRE-Association
Siemens Energy Global GmbH & Co. KG
SE I IM P Intellectual Property
Siemenspromenade 9
91058 Erlangen (DE)

(54) POSITION OBSERVER FOR SYNCHRONOUS MACHINES

(57)  It is described a method of determining an electrical rotor position value (108) of an electrical, in particular permanent magnet, synchronous machine (1361) having a stator (1362) with stator windings, the method comprising: providing plural candidate values (106) for the electrical rotor position; providing plural stator winding current component values (103a) and plural stator winding voltage component values (103b); calculating, in particular using a set of equations (eqs.(3,4;5,6)), values of components (105a,b) of an estimated back EMF based on the plural candidate values (106), the plural current component values (103a) and the plural voltage component values (103b); providing (107) a cost function (g) being a real valued function of the components (105a,b) of the estimated back EMF which evaluates to two different values if an error of the electrical rotor position value is zero or pi; assessing the candidate values (106) using the cost function (g); defining a value (108) as the actual electrical rotor position value based on the assessment.

FIG 1

Processed by Luminess, 75001 PARIS (FR)

EP 4 475 426 A1

**Description**

Field of invention

The present invention relates to a method and a corresponding arrangement of determining an electrical rotor position value of an electrical synchronous machine having a stator with stator windings. Further, a method for controlling the electrical machine is provided. Still further, an electrical synchronous machine system is provided as well as a wind turbine comprising the electrical synchronous machine system.

Art Background

For controlling a permanent magnet synchronous machine, in particular using vector control, the rotor electrical position may be required. The rotor electrical position may be required for transforming current measurements and voltage measurements or voltage reference quantities to a rotating reference frame which is denoted as a dq reference frame. Also, the rotor electrical position may be required for a back transformation into the stationary reference frame.

The rotor electrical position may conventionally be obtained using different approaches. In one approach, current measurements and/or voltage measurements or voltage reference values are utilized in a set of equations, in order to calculate the rotor electrical position. This methodology may also be referred to as sensorless determination of the electrical rotor position.

For sensorless control of permanent magnet synchronous machines (PMSMs), a back electromotive force (back-EMF) based position observer is conventionally used to obtain the rotor position information. A phase-locked loop (PLL) based position observer has been widely used since it is simple and easy to implement. However, the dynamic performance of the conventional PLL based position observer may not be satisfactory. In wind turbine applications, a high performance position observer is key for adequate generator control and active drive train damping.

Conventional observers have been adopted for wind turbine applications, and their performance limitations accommodated by changes to control algorithms and demanding tuning of control parameters.

A so-called finite-position-set (FPS) position observer for the back-EMF based sensorless control was proposed. A finite set of rotor positions are evaluated and the optimal one is selected by minimizing a designed cost function. This type of observer can provide a better dynamic than conventional PLL based position observers. Simulation studies showed bandwidth can be higher than that of the conventional observers. However, there are several drawbacks found in the state-of-the-art:

   1) The conventional cost function may introduce an ambiguity of $\pi$ in the position error.
   2) Noise issues due to current derivative calculation.
   3) The dynamics of the observer cannot be manipulated.
   4) Computation burden is high.

Thus, there may be a need for a method and a corresponding arrangement of determining an electrical rotor position value of an electrical synchronous machine, wherein at least some of the above-mentioned problems or disadvantages are mitigated.

Therefore, several improvements are proposed in this invention to solve these issues which makes the FPS position observer more feasible for the practical implementation.

Summary of the Invention

This need may be met by the subject matter according to the independent claims. Advantageous embodiments of the present invention are described by the dependent claims.

According to an embodiment of the present invention it is provided a method of determining an electrical rotor position value of an electrical, in particular permanent magnet, synchronous machine having a stator with stator windings, the method comprising: providing plural candidate values for the electrical rotor position; providing plural stator winding current component values and plural stator winding voltage component values; calculating, in particular using a set of equations (e.g. eq(3,4;5,6), see below), values of components of an estimated back EMF based on the plural candidate values, the plural current component values and the plural voltage component values; providing a cost function being a real valued function of the components of the estimated back EMF which evaluates to two different values if an error of the electrical rotor position value is zero or pi; assessing the candidate values using the cost function; defining a value as the actual electrical rotor position value based on the assessment.

The method may be implemented in software and/or hardware and may for example be performed by a controller of the synchronous machine, in particular by a module of a wind turbine controller. The method may be applied to a wind turbine.

The electrical rotor position value defines the rotor position in an electrical angle which is related to the mechanical or azimuthal rotor position or angle position by an equation comprising the number of pole pairs. The electrical rotor position value may be proportional to the mechanical rotor position or rotor azimuthal angle. The electrical rotor position value may be required for appropriately controlling the electrical machine in particular for vector control. The electrical rotor position value may be utilized for transforming electrical quantities, like currents or voltages, from a stationary coordinate frame to a synchronously rotating reference frame (dq-frame, synchronously rotating with the rotor) and the electrical rotor position value may as well as be utilized for back transformation of d-, q-components of electrical quantities to components of a stationary coordinate system.

The synchronous machine may comprise a stator with one or more stator segments which together form a whole circumference. The stator may comprise one or more sets of stator windings, each set of stator windings providing multiple phases, for example three phases. The different sets of stator windings may be connected in parallel or in series. The synchronous machine further may comprise a rotor having plural permanent magnets mounted thereon. The rotor may be an outer rotor or an inner rotor.

The sets of stator windings may be connected to one or more converters which may be configured to convert a variable frequency power stream to a substantially DC power stream and further to convert the DC power stream to a substantially fixed-frequency power stream. The fixed-frequency power stream may be supplied to a utility grid to which plural consumers may be connected.

The method may be based on a voltage model of the synchronous machine. The method may implement an EMF observer or a so-called finite-position-set (FPS) position observer for the back EMF based sensorless control.

The plural candidate values for the electrical rotor position may be provided initially and the plural initial candidate values may for example include 5 to 30 position values within the angle interval of 0° to 360°. The candidate values may for example be evenly distributed within the angle interval of 0° to 360°. During performing the method, the set of candidate values may be subject to change, for example when the final or actual electrical rotor position value is determined in an iterative manner, thereby in particular improving the accuracy of the determination.

The plural stator winding current component values may for example comprise current values of currents carried in the stator windings, which correspond to the multiple phases, such as phases A, B, C. The current component values may therefore correspond to values in a stationary reference frame. The current component values may also be provided in a so-called alpha-beta reference frame which is also a stationary reference frame into which the currents of the multiple phases can be transformed by known equation. In other embodiments, the stator winding current component values may be given in other coordinate frames. Similarly, the plural stator winding voltage component values may be provided in an a,b,c stationary reference frame or the alpha-beta stationary reference frame for example. The plural stator winding current and voltage component values may relate or may be associated with a particular one of the winding sets of the stator windings.

If there are two or more stator winding sets, the same model of the first winding set can be used for the second winding set or any other winding set and the same method as for the first winding set may be applied.

The calculating step may utilize a set of equations which at least partially form the voltage model. The set of equations may relate the currents to the voltages including proportionally constants like resistance of the winding sets, inductance of the winding set(s) and also involving for example an estimate of the rotational speed. Further, the equations may comprise the magnetic flux values being provided by the permanent magnets. The voltage model may be a theoretical/mathematical model simulating or modelling the electrical behaviour of the synchronous machine in terms of voltages and currents. The voltage model may for example be given in the d-q rotating reference frame which synchronously rotates with the rotor. The model may also involve some equations which relate to an estimated d-q rotating reference frame. The equations may for example enable to calculate an estimated voltage based on estimated currents and an error term which is herein denoted as the estimated back EMF (estimated back electro motoric force). The Error term may be considered as a voltage error term due to an error of the electrical rotor position value.

The voltage model in general may comprise equations for particular samples of the voltage which are associated to a particular sampling time. The components of the estimated back EMF may for example comprise or be the d-component as well as the q-component of the estimated back EMF.

For each of the plural candidate values, two components of the estimated back EMF may be calculated. The cost function may be a function of both components, for example the d-component as well as the q-component of the estimated back EMF. When the two components of the estimated back EMF are arguments of the cost function, an ambiguity of the determination of the electrical rotor position value may be avoided which was present in conventional methods.

The cost function may have at least two arguments. Besides the two components of the estimated back EMF, the cost function further optionally may comprise further arguments, as will be explained below. The function value of the cost function may be a real number based on which the respective candidate values can be assessed. For example, the cost function values for all of the plural candidate values may be compared. In a most simple variant of the method, that candidate value which leads to the lowest cost function may be selected or defined as the actual electrical rotor position value. In preferred embodiments, however, the determination of the electrical rotor position value may be performed in an iterative manner involving to define in each iteration step a new set of candidate values are then assessed using the (same) cost function. The number of iterations may be adapted in order to reach a particular desired accuracy of the determination of the electrical rotor position value.

The cost function has the property that it evaluates two different values if the error of the respective tried candidate value from the true rotor position value is zero or (a multiple of) pi. The cost function in particular may have only a (one) minimum when the error of the electrical rotor position value is 0 and may have a larger value if the error of the electrical rotor position value is pi or a multiple of pi. Thereby, the ambiguity of the determination of the electrical rotor position value may be avoided which may in particular be exploited during control of the electrical machine. Thereby control of the electrical machine may be improved.

According to an embodiment of the present invention, the cost function is a function of the d-component and the q-component of the estimated back EMF, wherein the cost function evaluates to changing (or different) values if the d-component and/or the q-component of the estimated back EMF changes.

The cost function may be a function of at least two components of the estimated back EMF, but these components not necessarily must be the d-component and the q-component but any other two components which may be equivalent to the d-component and the q-component of a d-q reference frame. If, for example, the d-component of the estimated back EMF has a first (second) value and the q-component of the estimated back EMF has a first (second) value, the cost function may evaluate to a first (second) cost function value, the second value being different from the first cost function value.

Conventional methods may have evaluated only the d-component of the estimated back EMF resulting in ambiguity of rotor position determination.

According to an embodiment of the present invention, the cost function has a single minimum for an error of the electrical rotor position value being zero.

When the error of the electrical rotor position is for example pi or a multiple of pi, the cost function may have a value which is different from the single minimum value.

According to an embodiment of the present invention, the cost function comprises a first term that depends on, in particular a difference between, an absolute value of the d-component of the estimated back EMF and a value of the q-component of the estimated back EMF.

When also the q-component of the estimated back EMF is an argument in the cost function, the ambiguity can be avoided. The first term may be proportional to for example the difference between an absolute value of the d-component and a value of the q-component of the estimated back EMF. Thereby, a simple implementation may be provided which may ensure the avoidance of an ambiguity of the electrical rotor position value determination.

According to an embodiment of the present invention, the cost function further comprises a second term that depends on a temporal change of an estimated rotational speed, wherein the cost function is or comprises in particular a sum of the first term and the second term.

Not all embodiments may comprise a second term. The second term may, however, be advantageous, in order to introduce a penalty on speed change in the cost function. Thereby, noises may be reduced and large ripples may be avoided in the position estimation. The second term may carry a proportionality constant which may be adapted according to the particular application needs, higher values of the proportionality constant may provide higher penalty on speed changes.

By applying the second term, the dynamic of the system can be regulated.

According to an embodiment of the present invention, the temporal change of an estimated rotational speed corresponds to a difference between two subsequent samples of the estimated rotational speed.

Each of the estimated rotational speeds may be calculated from two samples of the estimated rotor position value. The speed change in turn may be calculated by two subsequent samples of the estimated rotational speed. Thereby, a simple implementation may be provided.

According to an embodiment of the present invention, defining a value as the actual electrical rotor position value based on the assessment comprises: defining a value as the actual electrical rotor position value, in particular in an iterative fashion, to be within an interval limited by those two candidate values in each iteration step which lead to two minimal values of the cost function.

Thereby, an improved searching strategy may be provided. The set of candidate values of the electrical rotor position values may be subject to change in each iteration cycle, thereby, restricting the candidate values to a range which has a dynamically diminished width in each iteration cycle. The final electrical rotor position then lies in the smallest angle interval reached when the iteration is terminated. By this methodology, the number of iterations may be kept in acceptable ranges, while the accuracy of the determination of the electrical rotor position may be satisfactory.

According to an embodiment of the present invention, selecting a value as the actual electrical rotor position value based on the assessment comprises: a first stage in which two candidate values from plural initial candidate values, in particular evenly distributed in an angle interval having width of 360°, are selected which lead to the two smallest values of the cost function; a second stage, in which it is iteratively performed: determining a mid position between the two previous candidate values; selecting, among the two previous candidate values and the mid position, those two as next candidate value which result in the two smallest cost function values.

Thereby, a detailed implementation may be provided which may in a simplified manner be transferred to a software code implementing the iterative method.

According to an embodiment of the present invention, the iteration is terminated after a predetermined number of iterations and/or wherein the actual electrical rotor position value is set to this candidate value which evaluates to the smallest cost function value in the last iteration step.

The predetermined number of iterations may for example be between 5 and 20 or for example between 5 and 15 or may for example be 15. The number of initial candidate values may for example range between 5 and 20, in particular between 5 and 10, in particular being 6.

According to an embodiment of the present invention, in the calculation step a calculation of a derivative or differential quotient of the current components is avoided.

The set of equations of the voltage model may comprise a term corresponding or being proportional to the derivative or a differential quotient of the current components. This term may be replaced by another term not comprising the derivative or differential quotient of the currents. Avoiding the derivative or differential quotient of the current components may reduce noise in the determination procedure and thereby improve the accuracy of the electrical rotor position determination.

The avoidance of the derivative or differential quotient of the current components may involve some assumptions or simplifications. In general, the voltage model may be represented in the d-q reference frame or the alpha-beta reference frame according to embodiments of the present invention. In the d-q reference frame it may for example be approximated that the derivative of the d-component as well as the derivative of the q-component of the currents is approximately 0.

When in the alpha-beta reference frame, it may be approximated that the sum of the square of the alpha-component and the beta-component of the current is constant, thus having derivative equal to 0.

According to an embodiment of the present invention, a derivative or differential quotient of the current of one component (alpha, beta) is replaced by a term being proportional to the current of the other component (beta, alpha), the proportionality coefficient being or comprising in particular a rotational speed.

For example, when in the alpha-beta frame, the derivative of the alpha-component of the current is set to be proportional to the beta-component of the current. Further, the derivative of the beta-component of the current may be set to be proportional to the alpha-component of the current. Thereby, a simple implementation may be provided.

According to an embodiment of the present invention, the current component values and/or voltage component values are components in dq-frame or alpha-beta-frame; and/or wherein the current component values are measured values and/or the voltage component values are reference values; and/or the method further comprising controlling the electrical machine based on the determined rotor position value.

Thereby, several implementation variants may be provided and the control of the electrical machine may be improved. The voltage component values may also be measured values. It may, however, be assumed that the reference values of the voltages may correspond to the true voltage component values. Using the reference values may simplify the method. The current component values may for example be measured at the stator windings, e.g. by sensors which may conventionally be installed at the electrical machine.

It should be understood, that features, individually or in any combination, disclosed, described, explained or provided for a method of determining an electrical rotor position value of an electrical machine may also, individually or in any combination, be applied or employed for an arrangement for determining an electrical rotor position value of an electrical synchronous machine, according to embodiments of the present invention and vice versa.

The method may for example be implemented by the arrangement for determining the electrical rotor position value. Further, the arrangement may be adapted to carry out the method of determining an electrical rotor position value of the electrical machine including to be adapted to carry out all the above explained embodiments of the method.

According to an embodiment of the present invention it is provided an arrangement for determining an electrical rotor position value of an electrical, in particular permanent magnet, synchronous machine having a stator with stator windings, the arrangement comprising: an electronic storage adapted to store plural candidate values for the electrical rotor position; an input port for receiving plural stator winding current component values and plural stator winding voltage component values; a processor adapted to calculate, in particular using a set of equations (e.g. eq(3,4;5,6) see below), values of components of an estimated back EMF based on the plural candidate values, the plural current component values and the plural voltage component values; a module providing a cost function being a real valued function of the components of the estimated back EMF which evaluates to two different values for an error of the electrical rotor position value being zero or pi; the processor being further adapted: to assess the candidate values using the cost function; and to define a value as the actual electrical rotor position value based on the assessment.

The arrangement may be implemented in software and/or hardware. The arrangement may for example be a portion of a controller, in particular a portion of a wind turbine controller. The processor may have access to the electronic storage. The cost function may for example also be stored in the electronic storage, for example as a portion of software code. In general, the electronic storage may comprise a computer program comprising instructions which are adapted, when carried out by the processor, to carry out a method of determining the electrical rotor position value according to an embodiment of the present invention.

According to an embodiment of the present invention it is provided an electrical synchronous machine system, comprising: an electrical, in particular permanent magnet, synchronous machine having a rotor and a stator with stator windings; and an arrangement according to the preceding embodiment connected to receive measurement values of the electrical machine, in particular connected to control the electrical machine.

Furthermore, according to an embodiment of the present invention it is provided a wind turbine, comprising: a rotor hub having plural rotor blades mounted; an electrical synchronous machine system, whose rotor is coupled to the rotor hub.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Embodiments of the present invention are now described with reference to the accompanying drawings. The invention is not restricted to the illustrated or described embodiments.

Fig. 1 schematically illustrates an arrangement for determining an electrical rotor position value of an electrical synchronous machine according to an embodiment of the present invention;

Fig. 2 schematically illustrates an arrangement for determining an electrical rotor position value of an electrical synchronous machine according to another embodiment of the present invention;

Figs. 3 and 4 illustrate graphs of function values of a cost function according to an embodiment of the present invention an a conventional cost function, respectively;

Figs. 5 and 6 illustrate experiment results of determining an electrical rotor position according to a conventional method and according to an embodiment of the present invention, respectively;

Figs. 7 and 8 illustrate experiment results of determining an electrical rotor position according to a conventional method and according to another embodiment of the present invention, respectively;

Figs. 9 and 10 illustrate experiment results of determining an electrical rotor position according to a conventional method and according to still another embodiment of the present invention, respectively;

Fig. 11 illustrates as a method scheme a search module according to an embodiment of the present invention as may be included in the arrangements illustrated in Figs. 1 and 2;

Fig. 12 schematically illustrates sets of candidate electrical rotor positions as defined or derived according to embodiments of the present invention; and

Fig. 13 schematically illustrates a wind turbine according to an embodiment of the present invention comprising an electrical synchronous machine system according to an embodiment of the present invention.

Detailed Description

The illustration in the drawings is in schematic form. It is noted that in different figures, elements similar or identical in structure and/or function are provided with the same reference signs or with reference signs, which differ only within the first digit. A description of an element not described in one embodiment may be taken from a description of this element with respect to another embodiment.

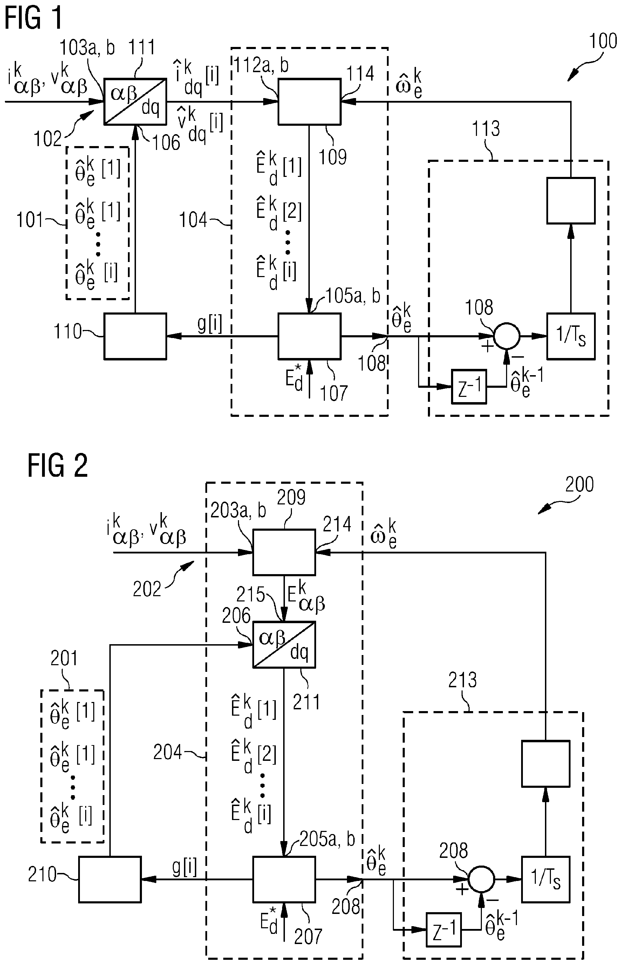

The arrangement 100 for determining an electrical rotor position value of an electrical synchronous machine according to an embodiment of the present invention illustrated in Fig. 1 comprises an electronic storage 101 which is adapted to store plural candidate values $\theta_e[i]$ (106) for the electrical rotor position. The arrangement 100 further comprises an input port 102 for receiving plural stator winding current component values $i\_\alpha,\beta$ and plural stator winding voltage component values $v\_\alpha,\beta$, also denoted or labelled with reference signs 103a, b.

The arrangement 100 further comprises a processor 104 which is adapted to calculate values of components of an estimated back EMF E_d, E_q, also referred to as or labelled with reference sign 105a,b of an estimated back EMF based on the plural candidate values 106, the plural current component values 103a and the plural voltage component values 103b.

The arrangement 100 further comprises a module 107 providing a cost function being a real valued function of the components 105a, 105b of the estimated back EMF (E) which evaluates to two different values for an error of the electrical rotor position value being zero or pi.

The processor 104 is further adapted to assess the candidate values 106 of the electrical rotor position using the cost function, as provided by the module 107, and to define a value θ_e (also labelled with reference sign 108) as the actual electrical rotor position value based on the assessment.

The arrangement 100 is adapted to carry out a method of determining an electrical rotor position value of an electrical synchronous machine according to embodiments of the present invention. Thereby, during the method, the plural candidate values 106, the plural stator winding current component values 103a and the plural stator winding voltage component values 103b are provided. Furthermore, during the method, values of components 105a, 105b of an estimated back EMF (E) are calculated based on the plural candidate values 106, the plural current component values 103a, and the plural voltage component values 103b. Furthermore, during the method, the candidate values 106 are assessed using a cost function which is a real valued function of the components 105a, 105b of the estimated back EMF which evaluates two different values for an error of the electrical rotor position value being zero or pi. Further, during the method, the candidate values 106 are assessed using the cost function and a value 108 is defined as the actual electrical rotor position value based on the assessment.

As can be appreciated from Fig. 1, the current component values and the voltage component values are components in an alpha-beta reference frame.

The alpha- and beta-components of the current may be derived by transformation from phase currents (i_a, i_b, i_c) of different phases of the winding set of the generator or the electrical machine.

Thereby, the following transformation equations may be utilized

$$\begin{bmatrix} i_\alpha \\ i_\beta \end{bmatrix} = \frac{2}{3} \begin{bmatrix} 1 & -\frac{1}{2} & -\frac{1}{2} \\ 0 & \frac{\sqrt{3}}{2} & -\frac{\sqrt{3}}{2} \end{bmatrix} \begin{bmatrix} i_a \\ i_b \\ i_c \end{bmatrix}, \qquad \begin{bmatrix} v_\alpha \\ v_\beta \end{bmatrix} = \frac{2}{3} \begin{bmatrix} 1 & -\frac{1}{2} & -\frac{1}{2} \\ 0 & \frac{\sqrt{3}}{2} & -\frac{\sqrt{3}}{2} \end{bmatrix} \begin{bmatrix} v_a \\ v_b \\ v_c \end{bmatrix} \qquad (1')$$

Then, they can be transformed into the rotating d-q-reference frame by:

$$\begin{bmatrix} i_d \\ i_q \end{bmatrix} = \begin{bmatrix} \cos\theta_e & \sin\theta_e \\ -\sin\theta_e & \cos\theta_e \end{bmatrix} \begin{bmatrix} i_\alpha \\ i_\beta \end{bmatrix}, \qquad \begin{bmatrix} v_d \\ v_q \end{bmatrix} = \begin{bmatrix} \cos\theta_e & \sin\theta_e \\ -\sin\theta_e & \cos\theta_e \end{bmatrix} \begin{bmatrix} v_\alpha \\ v_\beta \end{bmatrix} \qquad (2')$$

As will be explained below in detail, embodiments of the present invention may provide different features which are applied to a finite-position-set position observer. These features involve:

 1) New cost function design: eliminate the ambiguity of position error $\pi$
 2) Multi-objective cost function: realize the dynamic regulation of the position observer
 3) New search strategy: a method is proposed to reduce the computation burden
 4) Indirect current derivative calculation: reduce the high frequency noises in position estimation

In the following, a mathematical (voltage) model of a permanent magnet synchronous machine as employed in embodiments of the present invention is explained:

The voltage equations of a PMSM in the rotating reference frame can be given by:

$$v_d = R_s i_d + L_d \frac{di_d}{dt} - \omega_e L_q i_q$$

$$v_q = R_s i_q + L_d \frac{di_q}{dt} + \omega_e L_q i_d + E_{ex} \qquad (1)$$

where $v_d, v_q, i_d, i_q$ are the stator voltages and currents in dq-axes, respectively, $R_s$ is the resistance, $L_d$ and $L_q$ are the dq-axis

inductances, $\omega_e$ is the electrical rotor speed and $\psi_m$ is the PM flux-linkage, $E_{ex}$ is the extended back-EMF, i.e. $E_{ex} = [(L_d - L_q)(\omega_e i_d - p i_q) + \omega_e \psi_m]$ and $p$ is the differential operator Considering a small sampling instance $T_s$, by using the forward Euler based method, the discrete-time domain voltage model at the kth sampling interval is expressed as:

$$v_d^k = R_s i_d^k + L_d \frac{i_d^{k+1} - i_d^k}{T_s} - \omega_e^k L_q i_q^k$$

$$v_q^k = R_s i_q^k + L_d \frac{i_q^{k+1} - i_q^k}{T_s} + \omega_e^k L_q i_d^k + E_{ex} \qquad (2)$$

In a sensorless control drive system, the real rotor position is unknown. Therefore, (2) is transformed into the estimated rotating reference frame as:

$$\hat{v}_d^k = R_s \hat{i}_d^k + L_d \frac{\hat{i}_d^{k+1} - \hat{i}_d^k}{T_s} - \hat{\omega}_e^k L_q \hat{i}_q^k + \hat{E}_d^k$$

$$\hat{v}_q^k = R_s \hat{i}_q^k + L_d \frac{\hat{i}_q^{k+1} - \hat{i}_q^k}{T_s} + \hat{\omega}_e^k L_q \hat{i}_d^k + \hat{E}_q^k \qquad (3)$$

$$\begin{bmatrix} \hat{E}_d^k \\ \hat{E}_q^k \end{bmatrix} = E_{ex} \begin{bmatrix} -\sin \Delta \theta_e \\ \cos \Delta \theta_e \end{bmatrix} \qquad (4)$$

where the superscript sign ' ^ ' indicates the variables in the estimated synchronous reference frame, $\Delta \theta_e$ is the position error between the real and the estimated rotor position. Moreover, (3) and (4) can be expressed in the stationary reference as:

$$v_\alpha^k = R_s i_\alpha^k + L_d \frac{i_\alpha^k - i_\alpha^{k-1}}{T_s} + \omega_e^k \left( L_d - L_q \right) i_\beta^k + E_\alpha^k$$

$$v_\beta^k = R_s i_\beta^k + L_d \frac{i_\beta^k - i_\beta^{k-1}}{T_s} - \omega_e^k \left( L_d - L_q \right) i_\alpha^k + E_\beta^k \qquad (5)$$

$$\begin{bmatrix} E_\alpha^k \\ E_\beta^k \end{bmatrix} = E_{ex} \begin{bmatrix} -\sin \theta_e \\ \cos \theta_e \end{bmatrix} \qquad (6)$$

A finite number of position sets 106 is evaluated by the cost function provided by the module 107 which outputs the optimal rotor position which minimizes the cost function. Thereby, for calculating the estimated back EMF component values, a back-EMF calculation module 109 is utilized which is part of the processing capabilities of the processor 104 which may have access to an electronic storage storing software instructions adapted to carry out the required functions. Furthermore, the functional capabilities of the processor 104 include the definition of the cost function in the cost function module 107. Furthermore, the processor 104 may also have capabilities to provide a searching strategy in a module 110.

Embodiments of the present invention provide improvements with respect to the prior art in the back-EMF calculation module 109, in the cost function module 107 as well as in the searching strategy module 110. In other embodiments, the processor 104 may also comprise the functional capabilities of implementing for example the searching strategy and other modules illustrated in Fig. 1.

It should be understood that elements or structures in the different figures (e.g. 1 and 2) relating to different embodiments may be labelled with reference signs differing only in the first digit. A description of a respective element not described in detail with respect to a particular embodiment may be taken from the description of the corresponding element or structure of another illustrated or described embodiment.

In **Fig. 1,** the received plural stator winding current component values 103a and the plural stator winding voltage component values 103b are transformed using a transformation module 111 from a alpha-beta frame into components of dq-rotating reference frame i_dq, v_dq which are also labelled with reference sign 112a,b. A functional module 113 (including division element and a low pass filter) calculates based on the best estimation of the electrical rotor position 108, an estimation 114 of the rotational speed which is input to the back-EMF calculation module 109. The back-EMF calculation module 109 may for example evaluate one or more of the equations (3), (4) as listed above.

**Fig. 2** schematically illustrates an arrangement 200 for determining an electrical rotor position value of an electrical synchronous machine according to another embodiment of the present invention. The arrangement 200 has similarities to the arrangement 100, but comprises differences in the back-EMF calculation module 209 which for example can implement or carry out the equations (5), (6) listed above. To the calculated back-EMF 215 in the alpha-beta frame, the transformation module 211 is applied resulting in the back-EMF 205a,b in the d-q frame. The other modules illustrated in Fig. 2 of the arrangement 200 may be similar or even implemented in a same manner as the corresponding modules illustrated in Fig. 1 of the arrangement 100.

For the FPS position observer of Fig. 1 and 2, a finite number of position sets are evaluated by a cost function to find the optimal rotor position which can minimize the cost function. For the FPS observer, there are three main parts: 1) Back-EMF calculation, 2) Cost function, 3) Search strategy.

Firstly, for the back-EMF calculation part, there are two types, as illustrated in Figs. 1 and 2, respectively:

(a) The first type is implemented in the estimated rotating reference frame as shown in Fig. 1. For this position observer, the current and voltage are firstly transformed from stationary reference frame into the estimated rotating reference frame by using the estimated position from the finite position set. Then, the dq-axis estimated back-EMFs are calculated based on (3) and (4). The calculated back-EMFs are evaluated in the cost function.

(b) The second type is implemented in the stationary reference frame as shown in Fig. 2. The back-EMFs in the stationary reference frame are firstly calculated by using the current and voltage in the stationary reference frame based on (5) and (6). Then, the back-EMFs are transformed from stationary reference frame to the estimated rotating reference frame. Finally, the dq-axis estimated back-EMFs are evaluated in the cost function.

In the embodiments illustrated in Figs. 1 and 2, a current derivative calculation as used in conventional methods is avoided. Further, a cost function is improved compared to conventionally used cost functions. Thirdly, specific searching strategy is developed to effectively select the positions from the finite position set to calculate the back-EMFs in the estimated rotating reference frame and then these back-EMFs are evaluated in the cost functions. These details will be explained below in more detail.

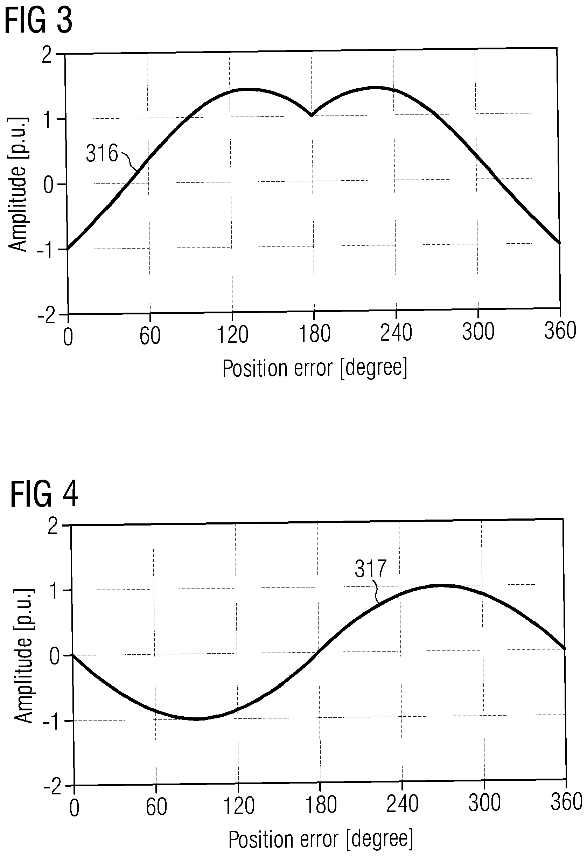

**Figs. 3 and 4** illustrate in coordinate systems having as abscissas the position error and having as an ordinate the amplitude of the cost function, a cost function graph 316 according to an embodiment of the present invention and a graph 317 of a conventional cost function in Figs. 3 and 4, respectively.

Improved Cost Function Design for Position Estimation In conventional methods, the cost function may be designed as:

$$g = \left| E_d^* - \hat{E}_d^k[i] \right| = \left| E_{ex} \sin \Delta\theta_e \right| \quad (7)$$

where the reference of d-axis estimated back-EMF is $E_d^* = 0$, $i$ are iteration indices of the finite position sets. The goal of eq. (7) is to find the optimal rotor position which makes $\hat{E}_d^k$ zero.

However, the conventional cost function in eq. (7) may result in a position estimation error of $\pi$, which prevents its application for sensorless control. According to eq. (4), both 0 and $\pi$ are minimum points for the estimated d-axis back-EMF, i.e. $\hat{E}_d$, and thus, an ambiguity of $\pi$ exists in the position estimation error.

Fig. 4 demonstrates the variation of the d-axis estimated back-EMF against rotor position error e . Clearly, there are two points which can lead the cost function to zero. Hence, an improved cost function is proposed to solve this issue.

The new designed cost function is expressed as:

$$g = \left| \hat{E}_d^k[i,j] \right| - \hat{E}_q^k[i,j] = \hat{E}_m^k[i,j] \quad (8)$$

where

$$\hat{E}_m^k = E_{ex} \left( \left| \sin \Delta\theta_e \right| - \cos \Delta\theta_e \right) \quad (9)$$

The modified back-EMF term $\hat{E}_m^k$ against the rotor position error is depicted in Fig. 3 (curve 316). Obviously, there is only one minimum point of $\hat{E}_m^k$. Therefore, with the newly de-signed $\hat{E}_m^k$, position error of $\pi$ can be eliminated. A reliable position estimation is expected.

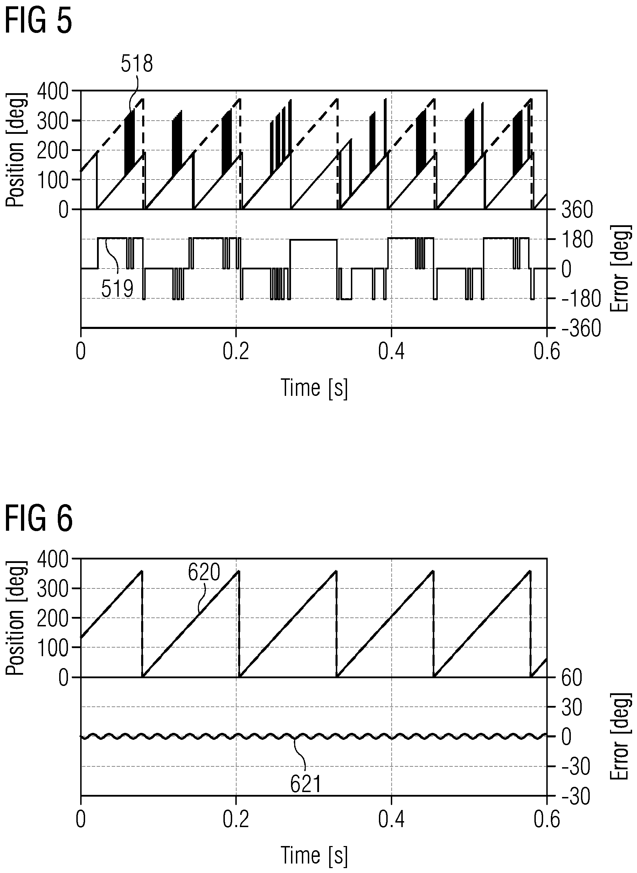

**Figs. 5 and 6** illustrate in coordinate systems having as an abscissa the time and having as an ordinate the position or the error of the position experimental results of a conventional method and a method according to an embodiment of the present invention, respectively. The curves 518 and 519 indicate the electrical rotor position and the error of the rotor position, respectively as obtained according to a conventional method. It can be appreciated that substantial errors of the rotor position determination are present. In Fig. 6, the curves 620, 621 illustrate the determined electrical rotor position and the error of the rotor position, respectively, which are obtained according to embodiments of the present invention.

The position estimation performance of FPS observer with the conventional cost function is shown in Fig. 5. Clearly, there are position errors of $\pi$ in the estimation which will deteriorate the control performance. For the FPS observer with the proposed cost function (eq. (8)) as shown in Fig. 6, a more reliable estimation is guaranteed.

Further embodiments of the present invention provide a still modified cost function which avoids noise in the definition of the rotor position by providing a penalty on speed change. The (e.g. multi-objective) cost function may for example be defined as follows:

In conventional methods, only the estimated back-EMF is considered in the cost function to estimate the rotor position. However, extra terms can be added into the cost function to improve or manipulate the control performance. Hence, a multi-objective cost function is proposed. An extra term is introduced/added into the cost function which is expressed as:

$$g_2 = \underbrace{\lambda_2 \left| \hat{\omega}_e^k - \hat{\omega}_e^{k-1} \right|}_{\text{Dynamic Regulation}} \quad (10)$$

where $\hat{\omega}_e^k$ and $\hat{\omega}_e^{k-1}$ are the estimated speed in kth and (k-1)th sampling instants and $\lambda_2$ is the weighting for the speed change penalty.

Then, the total cost function is expressed as:

$$g = \hat{E}_m^k[i,j] + \lambda_2 \left| \hat{\omega}_e^k - \hat{\omega}_e^{k-1} \right| \quad (11)$$

For the cost function $g_2$, the penalty on speed change is introduced to regulate the dynamic of the FPS position observer. For the conventional FPS position observer, the dynamic is very high and the harmonics and noises will be amplified which will result in large ripples and noises in the position estimation. By introducing $g_2$, these impacts can be mitigated. Moreover, with eq.(10), the current derivative calculation can be directly used, which is an alternative to realize the current derivative calculation to the method proposed below.

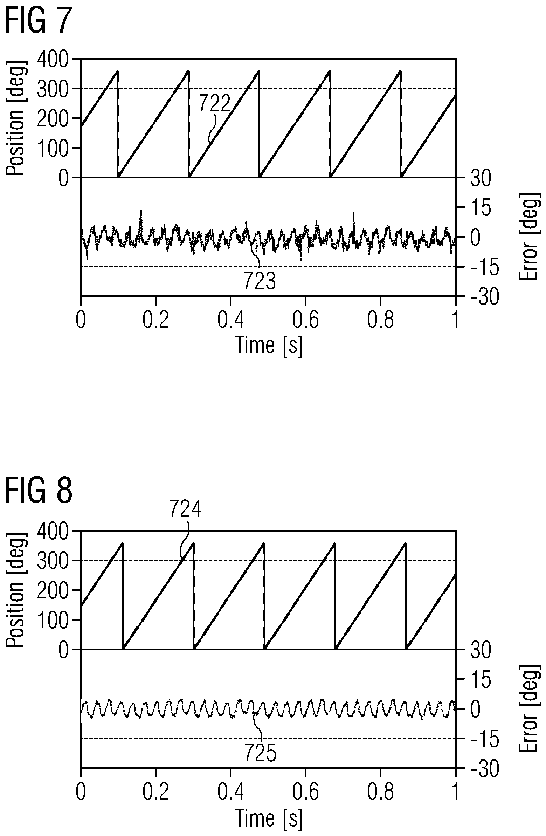

**Figs. 7 and 8** illustrate in coordinate systems having as abscissas the time and having as ordinates the position or the position errors results of a conventional method and a method according to embodiments of the present invention, respectively. The curves 722, 723 in Fig. 7 illustrate the determined electrical rotor position and the error of the rotor position as obtained using a conventional method. The curves 724, 725 in Fig. 8 illustrate the electrical rotor position as determined according to embodiments of the present invention as well as the rotor position error 725 according to embodiments of the present invention, respectively using as cost function $g_2$ eq.(10). It can be appreciated from the curve 725 in Fig. 8 that the harmonics and noises are effectively suppressed in comparison to the curve 723 in Fig. 7.

Embodiments of the present invention further provide improved current derivative calculation as detailed below.

For the FPS observer in stationary reference frame as shown in the Fig. 1, in order to calculate the back-EMFs, the current derivatives are required to be calculated which is expressed as:

$$\frac{di_\alpha}{dt} = \frac{i_\alpha^k - i_\alpha^{k-1}}{T_s}, \quad \frac{di_\beta}{dt} = \frac{i_\beta^k - i_\beta^{k-1}}{T_s} \quad (12)$$

However, in the practical implementation, direct calculation of derivative can be noisy and thus affect the position estimation performance. Hence, according to the expression of the stator current in stationary reference frame which is given by:

$$\begin{cases} i_\alpha = I_m \cos(\theta_e + \theta_i) \\ i_\beta = I_m \sin(\theta_e + \theta_i) \end{cases} \quad (13)$$

where $I_m = \sqrt{i_\alpha^2 + i_\beta^2}$ and $\theta_i$ is the current angle, the derivative terms can be modified as:

$$\begin{cases} \dfrac{di_\alpha}{dt} = -\omega_e^k I_m \sin(\theta_e + \theta_i) = -\omega_e^k i_\beta^k \\ \dfrac{di_\beta}{dt} = \omega_e^k I_m \sin(\theta_e + \theta_i) = \omega_e^k i_\alpha^k \end{cases} \quad (14)$$

In this way, the derivative operation can be avoided and the estimation becomes insensitive to noises. The speed in eq. (14) here should be the filtered speed.

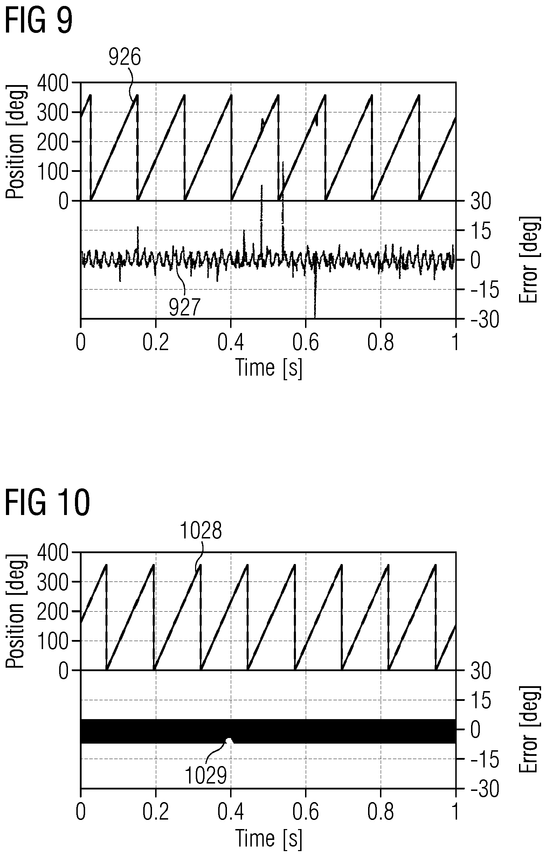

**Figs. 9 and 10** illustrate in coordinate systems having as abscissas the time and having as ordinates the rotor position and the rotor error in the position, respectively, simulation results as obtained according to a conventional method and according to a method according to an embodiment of the present invention, respectively. The curves 926, 927 in Fig. 9 illustrate the determined electrical rotor position and the error in the rotor position as obtained using a conventional method. The curves 1028 and 1029 in Fig. 10 illustrate the determined electrical rotor position as well as the error in the rotor position as obtained using embodiments of the present invention. Clearly with the proposed method, the noises in the position error (see curve 1029) are effectively suppressed.

For the FPS observer in the estimated rotating reference frame (see Fig. 2), considering a small sampling period $T_s$, the dq-axis current can be assumed as constant in two consecutive instants, i.e. $i_{dq}^k \approx i_{dq}^{k-1}$. Then, the current derivative can be simplified as:

$$\frac{di_d}{dt} \approx 0, \ \frac{di_q}{dt} \approx 0 \quad (15)$$

Further embodiments of the present invention provide an improved searching strategy which may for example be implemented in the searching strategy modules 110, 210 of the arrangements 100 or 200 illustrated in Figs. 1 or 2.

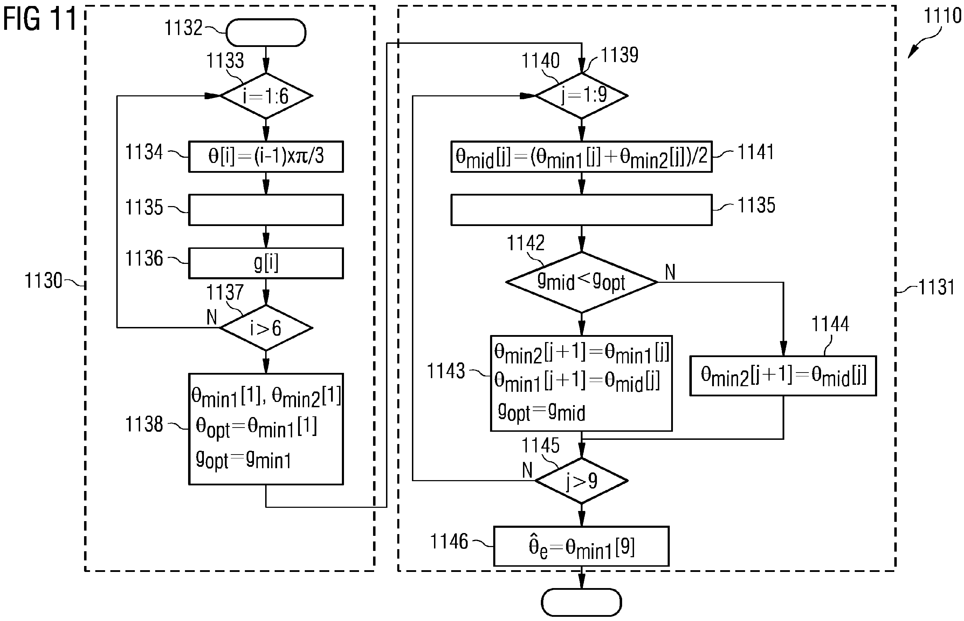

**Fig. 11** illustrates a searching module 1110 according to an embodiment of the present invention which may for example be comprised within the arrangement 100 or 200 or which may at least be carried out in the arrangements 100, 200 illustrated in Figs. 1 and 2.

The module 1110 comprises function portions of a first stage 1130 and function portions of a second stage 1131. After a start 1132 in the first stage 1130, an index i is incremented in the block 1133 within a particular range in the illustrated embodiment in the range of 1 to 6. In the following block 1134, one candidate θ(i) is calculated, wherein this candidate is a candidate of a set of initial candidates for the electrical rotor position. In block 1135, the back-EMF calculation is carried out having similar functionality as the back-EMF calculation modules 109, 209 illustrated in Figs. 1 and 2.

The back-EMF calculation is followed by the assessment by the cost function (block 1136) results in the functional value g(i) when the respective candidate of the rotor position is inserted into the back-EMF calculation equations and the cost function is evaluated.

In the decision module 1137 it is checked whether the index is larger than a predetermined index number, in present embodiment 6. In the module 1138, the two minimum values for the candidates are defined and they are supplied (labelled with reference sign 1139) to the second stage (1131).

In the second stage another index j is defined and incremented in each cycle in the module 1140. In the block 1141, the midpoint between the two previously determined minimum values of the rotor position 1139 is calculated and the back-EMF calculation is applied to the mid rotor position in the block 1135. In the evaluation block 1142, the respective mid point function value is compared with the previous optimum value. If this results to a positive affirmation, it is branched to the block 1143, in which the respective variables are updated. If the assessment 1142 results in a negative result, it is switched to the block 1144 in which a particular assignment is made. In the decision block 1145 it is checked whether the number of iterations is greater than a predetermined maximum number of iterations. If the maximum number of iterations is reached, the final estimated rotor position value θ_e is evaluated or set in the block 1146.

The proposed Search Strategy may comprise the following:

For the FPS position observer, a finite position set is used and a search strategy is designed to find the optimal position which minimizes the cost function. The search strategy directly determines the position estimation accuracy and the computation burden. However, conventionally there is a trade-off between computation burden and estimation accuracy. More accurate estimation result requires a higher computation burden. In other words, more positions should be evaluated. In this case, a more efficient search strategy is important to achieve a high estimation accuracy while maintaining low computation burden.

An improved search strategy is proposed herein which reduces the number of iterations to 15 iterations with the same accuracy of 0.001 rad.

The overall flow chart of the proposed search strategy is shown in Fig. 11. In total, there are 2 stages:

1) In the first Stage (1130), 6 positions are evaluated by the cost function as shown in Fig. 7. Two positions $\theta_{min1}$ and $\theta_{min2}$ with two smallest cost values are selected. The minimum cost is defined as the optimum one, i.e. $g_{opt} = g_{min1}$ and $\theta_{opt} = \theta_{min1}$.

2) In the second Stage (1131), a middle position $\theta_{mid}$ between the $\theta_{min1}$ and $\theta_{min2}$ is calculated and $\theta_{mid}$ is evaluated by the cost function and its cost $g_{mid}$ is compared to the $g_{opt}$. There are two cases of the comparison:

Case I: If $g_{mid} < g_{opt}$, the new $\theta_{min1}[j+1]$ is updated as $\theta_{mid}[j]$ and the new $\theta_{min2}[j+1]$ is updated as $\theta_{min1}[j]$. Therefore, in the (j+1)th iteration, $\theta_{mid}[j]$ is defined as the smallest and $\theta_{min1}[j]$ is defined as the second smallest one.

Case II: If $g_{mid} > g_{opt}$, the new $\theta_{min2}[j+1]$ is updated as $\theta_{mid}[j]$. $\theta_{min1}[j]$ is defined as the smallest and $\theta_{mid}[j]$ is defined as the second smallest one.

After 9 iterations, the position with the smallest cost is selected as the estimated rotor position, i.e., $\hat{\theta}_e = \theta_{min1}[9]$.

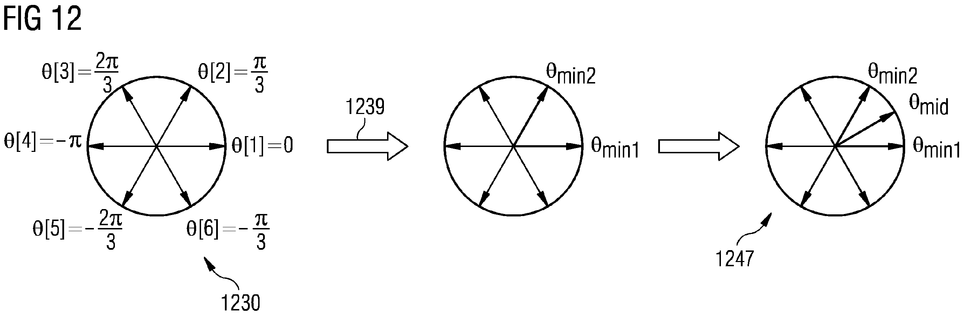

**Fig. 12** illustrates in a schematic manner the first stage 1230 which defines initial candidate values of the rotor positions which are then evaluated regarding their cost function values and resulting in the two positions with the smallest costs 1239. In the scheme 1247, the mid position θ_mid is calculated for the previously calculated positions having the smallest costs.

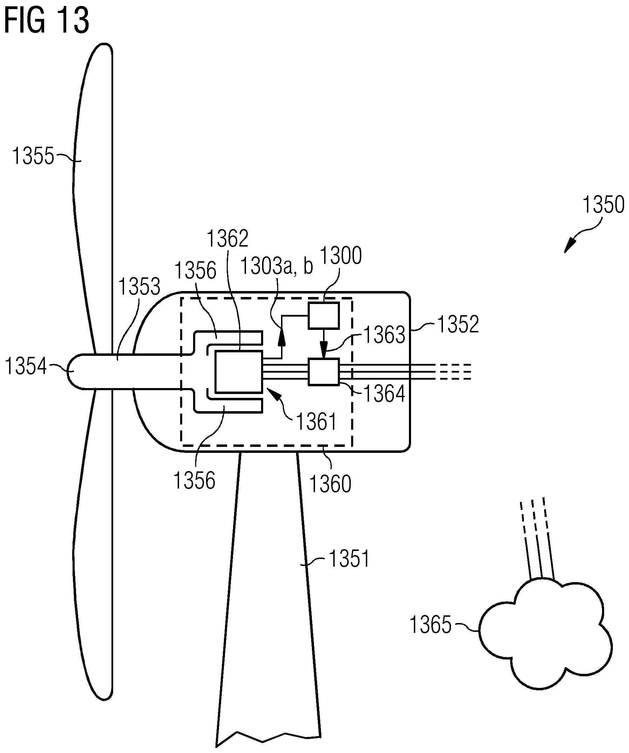

**Fig. 13** schematically illustrates a wind turbine 1350 according to an embodiment of the present invention. The wind turbine 1350 comprises a wind turbine tower 1351 and a nacelle 1352 mounted on top of the tower 1351. The nacelle 1352 harbours a rotation shaft 1353 at which (in particular via a hub 1354) plural rotor blades 1355 are mounted. The rotor hub 1354 is via the rotor shaft 1353 mechanically coupled to a rotor 1356 of an electrical synchronous machine system 1360 according to an embodiment of the present invention.

The electrical synchronous machine system 1360 comprises an electrical synchronous machine 1361 having the rotor 1356 and a stator 1362 with stator windings (not in detail illustrated).

The electrical synchronous machine system 1360 further comprises an arrangement 1300 which may for example be configured as the arrangements 100, 200 illustrated in Figs. 1 or 2 which is connected to receive measurement values 1303a,b of the electrical machine 1361 and in particular also connected to control the electrical machine 1361. In the illustrated embodiment, the control of the arrangement 1300 is via control signals 1363 which are supplied to a converter 1364 which is connected to the electrical machine 1361. The converter output terminals are connected to a utility grid 1365.

Embodiments of the present invention may provide the following features and/or advantages:

1) Position estimation accuracy enhancement: A new cost function is designed to estimate the rotor position and eliminate the ambiguity of position error $\pi$ in the conventional methods.

2) Realization of dynamic regulation: a speed change penalty change term is introduced in the cost function which can be used to regulate the dynamics of the FPS observer and suppress the harmonics and high frequency noises in the position error.

3) Computation burden reduction: A search strategy is proposed to reduce the total iteration number from 24 to 15, thus reducing the computation burden.

4) Current derivative calculation: An indirect calculation method of current derivative is proposed to obtain the back-EMFs, which works effectively to avoid the high frequency noises in the position estimation due to current derivative.

5) With these improvements, this high bandwidth FPS observer becomes feasible and reliable for a practical implementation purpose. Once it is reliable to use, its high bandwidth advantage can help to increase the control bandwidth of the overall system.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1. Method of determining an electrical rotor position value (108) of an electrical, in particular permanent magnet, synchronous machine (1361) having a stator (1362) with stator windings, the method comprising:

   providing plural candidate values (106) for the electrical rotor position;
   providing plural stator winding current component values (103a) and plural stator winding voltage component values (103b);
   calculating, in particular using a set of equations (eqs.(3,4;5,6)), values of components (105a,b) of an estimated back EMF based on the plural candidate values (106), the plural current component values (103a) and the plural voltage component values (103b);
   providing (107) a cost function (g; eq. (8,9)) being a real valued function of the components (105a,b) of the estimated back EMF which outputs two different values if an error of the electrical rotor position value is zero or pi and in particular has a unique minimum for an error of zero;
   assessing the candidate values (106) using the cost function (g);
   defining a value (108) as the actual electrical rotor position value based on the assessment.

2. Method according to the preceding claim, wherein the cost function (g) is a function of the d-component ($E\_d$) and the q-component ($E\_q$) of the estimated back EMF (105a,b), wherein the cost function evaluates in particular to changing values if the d-component and/or the q-component of the estimated back EMF changes.

3. Method according to one of the preceding claims, wherein the cost function (g) has a single minimum for an error of the electrical rotor position value being zero.

4. Method according to one of the preceding claims, wherein the cost function (g) comprises a first term that depends on, in particular a difference between, an absolute value of the d-component ($E\_d$) of the back EMF and a value of the q-component ($E\_q$) of the estimated back EMF.

5. Method according to one of the preceding claims, wherein the cost function (g) further comprises a second term that depends on a temporal change of an estimated rotational speed,
   wherein the cost function is or comprises in particular a sum of the first term and the second term.

6. Method according to the preceding claim, wherein the temporal change of an estimated rotational speed corresponds to a difference between two subsequent samples of the estimated rotational speed.

7. Method according to one of the preceding claims, wherein defining a value as the actual electrical rotor position value (108) based on the assessment comprises:
   defining a value as the actual electrical rotor position value, in particular in an iterative fashion, to be within an interval limited by those two candidate values in each iteration step which lead to two minimal values of the cost function.

8. Method according to one of the preceding claims, wherein selecting a value as the actual electrical rotor position value based on the assessment comprises:

   a first stage (1130) in which two candidate values (1139) from plural initial candidate values (106), in particular evenly distributed in an angle interval having width of 360°, are selected which lead to the two smallest values of the cost function;
   a second stage (1131), in which it is iteratively performed:

   determining a mid position ($\theta\_mid$) between the two previous candidate values ($\theta\_min1$, $\theta\_min2$);
   selecting, among the two previous candidate values ($\theta\_min1$, $\theta\_min2$) and the mid position ($\theta\_mid$), those two as next candidate value which result in the two smallest cost function values.

9. Method according to the preceding claim,

wherein the iteration is terminated after a predetermined number of iterations and/or
wherein the actual electrical rotor position value is set to this candidate value which evaluates to the smallest cost function value in the last iteration step.

10. Method according to one of the preceding claims, wherein in the calculation step a calculation of a derivative or differential quotient of the current components is avoided.

11. Method according to one of the preceding claims, wherein a derivative or differential quotient of the current of one component (alpha, beta) is replaced by a term being proportional to the current of the other component (beta, alpha), the proportionality coefficient being or comprising in particular a rotational speed.

12. Method according to one of the preceding claims,

wherein the current component values (103a) and/or voltage component values (103b) are components in dq-frame or alpha-beta-frame; and/or
wherein the current component values (103a) are measured values and/or the voltage component values (103b) are reference values; and/or
the method further comprising:
controlling (1363) the electrical machine (1361) based on the determined rotor position value.

13. Arrangement (100) for determining an electrical rotor position value (108) of an electrical, in particular permanent magnet, synchronous machine (1361) having a stator (1362) with stator windings, the arrangement comprising:

an electronic storage (101) adapted to store plural candidate values (106) for the electrical rotor position;
an input port (102) for receiving plural stator winding current component values (103a) and plural stator winding voltage component values (103b);
a processor (104) adapted to calculate, in particular using a set of equations (eqs.(3,4;5,6)), values of components (105a,b) of an estimated back EMF (E) based on the plural candidate values, the plural current component values and the plural voltage component values;
a module (107) providing a cost function (g; eq. (8,9)) being a real valued function of the components (105a,b) of the estimated back EMF which evaluates to two different values if an error of the electrical rotor position value is zero or pi;
the processor (104) being further adapted:

to assess the candidate values (106) using the cost function (g);
to define a value (18) as the actual electrical rotor position value based on the assessment.

14. Electrical synchronous machine system (1360), comprising:

an electrical, in particular permanent magnet, synchronous machine (1361) having a rotor (1356) and a stator (1362) with stator windings; and
an arrangement (1300) according to the preceding claim connected to receive measurement values (1303a,b) of the electrical machine, in particular connected to control (1363) the electrical machine.

15. Wind turbine (1350), comprising:

a rotor hub (1354) having plural rotor blades (1355) mounted;
an electrical synchronous machine system (1360), whose rotor (1356) is coupled to the rotor hub (1354).

# FIG 1

# FIG 2

FIG 3

FIG 4

FIG 5

FIG 6

FIG 7

FIG 8

FIG 9

FIG 10

**FIG 11**

1110

1130

1132

1133   i=1:6

1134   $\theta[i] = (i-1) \times \pi/3$

1135

1136   g[i]

1137   i>6   N

1138   $\theta_{min1}[1],\ \theta_{min2}[1]$   $\theta_{opt} = \theta_{min1}[1]$   $g_{opt} = g_{min1}$

1131

1139   j=1:9

1140

1141   $\theta_{mid}[i] = (\theta_{min1}[i] + \theta_{min2}[i])/2$

1135

1142   $g_{mid} < g_{opt}$   N

1144   $\theta_{min2}[j+1] = \theta_{mid}[i]$

1143   $\theta_{min2}[j+1] = \theta_{min1}[i]$   $\theta_{min1}[j+1] = \theta_{mid}[i]$   $g_{opt} = g_{mid}$

1145   j>9   N

1146   $\hat{\theta}_e = \theta_{min1}[9]$

## FIG 12

$\theta[3] = \frac{2\pi}{3}$  $\theta[2] = \frac{\pi}{3}$

$\theta[4] = -\pi$  $\theta[1] = 0$

$\theta[5] = -\frac{2\pi}{3}$  $\theta[6] = -\frac{\pi}{3}$

1230

1239

$\theta_{min2}$

$\theta_{min1}$

$\theta_{min2}$

$\theta_{mid}$

$\theta_{min1}$

1247

EP 4 475 426 A1

FIG 13

1355

1350

1362

1356  1303a, b  1300

1353

1352

1354

1363

1364

1356

1361

1360

1351

1365

Europäisches
Patentamt
European
Patent Office
Office européen
des brevets

# EUROPEAN SEARCH REPORT

**Application Number**

EP 23 17 7573

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN SHUO ET AL: "Sensorless Control of PMSM Drives Using Quasi Resonant Internal Model-Based Extended State Observer and Newton-Raphson Method Based Phase-Locked Loop", 2021 IEEE 2ND CHINA INTERNATIONAL YOUTH CONFERENCE ON ELECTRICAL ENGINEERING (CIYCEE), IEEE, 15 December 2021 (2021-12-15), pages 1-7, XP034071016, DOI: 10.1109/CIYCEE53554.2021.9676860 [retrieved on 2022-01-10] | 1-4, 8-10,13 | INV. H02P21/18 |
| Y | * paragraph [title] * * page 1, right-hand column, paragraph second * * equation 1; page 2, left-hand column, paragraph second; figure 10 * * equation 2; page 2, left-hand column, paragraph second * * paragraph [conclusion] * ----- | 5-7,11, 12,14,15 | |
| Y | CN 116 191 963 A (UNIV XIAN TECHNOLOGY) 30 May 2023 (2023-05-30) * equation 10; paragraph [0042] * * paragraph [0068] * ----- | 5-7,11, 12,14 | |

**TECHNICAL FIELDS SEARCHED (IPC)**

H02P

-/--

The present search report has been drawn up for all claims

| Place of search | Date of completion of the search | Examiner |
|---|---|---|
| Munich | 31 October 2023 | Fligl, Stanislav |

EPO FORM 1503 03.82 (P04C01)

**page 1 of 2**

Europäisches
Patentamt

European
Patent Office

Office européen
des brevets

# EUROPEAN SEARCH REPORT

Application Number

EP 23 17 7573

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ABDELRAHEM MOHAMED ET AL: "Computationally Efficient Finite-Position-Set-Phase-Locked Loop for Sensorless Control of PMSGs in Wind Turbine Applications", IEEE TRANSACTIONS ON POWER ELECTRONICS, INSTITUTE OF ELECTRICAL AND ELECTRONICS ENGINEERS, USA, vol. 36, no. 3, 11 August 2020 (2020-08-11), pages 3007-3016, XP011817165, ISSN: 0885-8993, DOI: 10.1109/TPEL.2020.3015575 [retrieved on 2020-10-26] * figure 3 * | 15 | |

TECHNICAL FIELDS
SEARCHED     (IPC)

The present search report has been drawn up for all claims

| Place of search | Date of completion of the search | Examiner |
|---|---|---|
| Munich | 31 October 2023 | Fligl, Stanislav |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

This annex lists the patent family members relating to the patent documents cited in  the above-mentioned European search report.
The members are as contained in the European Patent Office EDP file on
The European Patent Office is in no way liable for these particulars which are merely given for the purpose of information.

31-10-2023

| Patent document cited in search report | Publication date | Patent family member(s) | Publication date |
|---|---|---|---|
| CN 116191963 A | 30-05-2023 | NONE | |

For more details about this annex : see Official Journal of the European Patent Office, No. 12/82

EPO FORM P0459